# FASCICULE DE BREVET EUROPEEN

(11) **EP 1 093 944 B1**
(45) Date de publication et mention de la délivrance du brevet: **06.04.2005**
(21) Numéro de dépôt: 00122591.1
(22) Date de dépôt: 17.10.2000
(51) Int. Cl.: B60H 1/03

(54) **Dispositif de chauffage ou climatisation d'un habitacle de véhicule automobile, muni d'une source de chauffage additionnelle**
Klima- oder Heizanlage für den Fahrgastraum eines Kraftfahrzeugs, ausgerüstet mit einer zusätzlichen Wärmequelle
Air conditioning or heating device for a vehicle compartment, supplied with a source of additional heating

(30) Priorité: 19.10.1999 FR 9913030
(43) Date de publication de la demande: 25.04.2001
(73) Titulaire: VALEO SYSTEMES THERMIQUES, 78320 Le Mesnil Saint-Denis (FR)
(72) Inventeur: Ben Fredj, Mounir, 78180 Montigny le Bretonneux (FR); Nadir, Noureddine, 92150 Suresnes (FR); Gottwald, Nicolas, 96450 Coburg (DE)

(56) Documents cités:
- DE-A- 19 823 457
- DE-A- 19 905 072
- GB-A- 989 768
- US-A- 4 520 258
- US-A- 5 375 427

## Description

L'invention concerne un dispositif de chauffage ou climatisation de l'habitacle d'un véhicule automobile.

Un dispositif de ce type comprend un échangeur de chaleur, dans lequel circule un fluide d'échange thermique pour coopérer thermiquement avec un flux d'air qui traverse l'échangeur. Ce dispositif comprend un module de commande d'une vanne d'alimentation en fluide de l'échangeur, en vue de modifier la température du flux en fonction du débit de fluide dans l'échangeur.

Il est souhaité, dans un tel dispositif, une seconde source de chaleur additionnelle, propre à se déclencher en cas d'insuffisance de l'échangeur de chaleur précité.

Les documents GB 989 768, DE 198 23 457, et US 5 375 427 décrivent divers dispositifs de ce genre dans lesquels les vannes de commande sont de type mécanique.

Dans le Brevet délivré FR-2753135 de la Demanderesse, il est décrit un dispositif de chauffage ou climatisation muni d'une source de chauffage additionnelle, alimentée électriquement. Dans ce Brevet, il est prévu en revanche un volet de mixage entre un conduit d'air chaud et un conduit d'air froid, dont la position angulaire gère la température de l'air en sortie des deux conduits. La source de chaleur additionnelle est alimentée par l'intermédiaire de moyens de commutation, reliés mécaniquement à un axe du volet. Ainsi, lorsque le volet ferme progressivement le conduit d'air froid, la seconde source de chaleur se déclenche et/ou sa puissance augmente.

L'un des buts de la présente invention est de fournir un dispositif de chauffage et/ou climatisation, comprenant un échangeur de chaleur du type précité, ainsi qu'une source de chaleur additionnelle, électrique, propre à se déclencher lorsqu'une augmentation en température du flux d'air traversant l'échangeur est souhaitée.

Selon l'invention, un dispositif du type précité comporte en outre une source de chaleur additionnelle, électrique, propre à être mise en service pour élever ladite température, et le module de commande de l'échangeur est agencé en outre pour déclencher l'alimentation de la seconde source et/ou augmenter sa puissance lorsque le débit du fluide dans l'échangeur est réglé en vue d'augmenter la température du flux d'air.

Dans une forme de réalisation préférée, l'échangeur de chaleur est un radiateur de chauffage du flux d'air et le module de commande est agencé pour activer la seconde source en cas d'insuffisance du radiateur.

Avantageusement, la vanne est de type électronique et le module de commande est propre à délivrer un premier signal de commande de la vanne, ainsi qu'un second signal de commande de la seconde source, fonction du premier signal précité.

Préférentiellement, la vanne est de type hacheuse et le premier signal est un signal à échelons, avec des niveaux bas induisant une fermeture de la vanne et des niveaux hauts induisant une ouverture de la vanne, tandis que le second signal est un signal à échelons, avec des niveaux bas induisant un arrêt d'alimentation électrique de la seconde source et des niveaux hauts induisant une mise en service de la seconde source.

Dans une première forme de réalisation, le module de commande est agencé pour faire varier la puissance de la seconde source proportionnellement à un débit moyen de fluide dans l'échangeur.

De préférence, le premier signal est sensiblement périodique et le module de commande est agencé pour mettre en forme le second signal à partir d'une augmentation de la période du premier signal.

Dans une seconde forme de réalisation, le module de commande est agencé pour déclencher l'alimentation de la seconde source à partir d'un seuil d'un débit moyen de fluide dans l'échangeur.

Dans ce second mode de réalisation, le module de commande est, de préférence, agencé pour mettre en forme le second signal à partir d'une intégration du premier signal sur une durée prédéterminée, les niveaux hauts du second signal correspondant à une valeur d'intégration supérieure à une valeur seuil prédéterminée.

Selon une variante des deux modes de réalisation précités, la vanne est une vanne mécanique, de type robinet, et le module de commande comporte un organe de contrôle mécanique du débit, apte à se déplacer pour modifier le débit dans la vanne, ainsi que des moyens de commutation électrique capables de coopérer avec l'organe de contrôle pour déclencher l'alimentation de la seconde source et/ou augmenter sa puissance en fonction d'un déplacement de l'organe de contrôle.

Avantageusement, la seconde source est propre à dégager de la chaleur par effet Joule et elle comprend à cet effet au moins une résistance à coefficient de température positif.

D'autres caractéristiques et avantages de l'invention apparaîtront à l'examen de la description détaillée ci-après, et des dessins annexés sur lesquels :
- la figure 1 représente schématiquement un dispositif selon l'invention, comprenant un échangeur de chaleur et une seconde source de chaleur traversée par un flux d'air F circulant dans un conduit d'une installation de ventilation, chauffage et/ou climatisation d'un habitacle de véhicule ;
- la figure 2A représente schématiquement l'allure temporelle d'un signal S1 de commande d'une vanne montée sur l'échangeur de chaleur du dispositif selon l'invention ;
- la figure 2B représente schématiquement l'allure temporelle d'un signal S2 de commande électrique de la seconde source précitée ; et
- la figure 3 représente un exemple d'un mode de réalisation particulier d'un module de mise en forme du signal S2 de commande de la seconde source.

La description détaillée ci-après et les dessins annexés contiennent pour l'essentiel des éléments de caractère certain. Ils pourront non seulement servir à mieux faire comprendre la présente invention mais aussi contribuer à sa définition, le cas échéant.

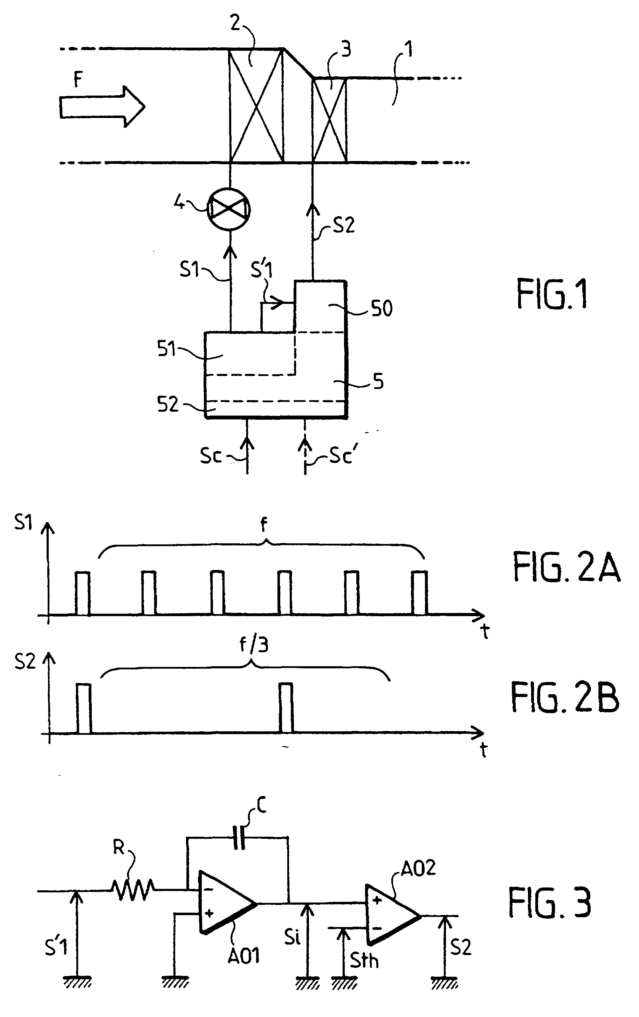

On se réfère tout d'abord à la figure 1 pour décrire un dispositif de chauffage d'une installation de ventilation, chauffage et/ou climatisation d'un habitacle de véhicule automobile. Le dispositif comprend un radiateur de chauffage 2 (radiateur à eau dans l'exemple décrit), dans lequel circule un fluide d'échange thermique (eau dans l'exemple décrit). Ce fluide est propre à coopérer thermiquement avec un flux d'air (flèche F) traversant l'échangeur de chaleur 2, en vue d'augmenter la température de ce flux d'air F. Le radiateur comprend une tubulure sur laquelle est montée une vanne 4 d'alimentation du radiateur en fluide d'échange thermique. Ainsi, en augmentant le débit de fluide dans la vanne 4, on augmente la capacité calorifique du radiateur 2, et, de là, la température du flux d'air F qui le traverse.

Le dispositif selon l'invention comprend en outre une source de chaleur additionnelle, électrique. Cette source additionnelle dégage de la chaleur par effet Joule et comprend une pluralité de résistances ohmiques. Préférentiellement, elle comprend au moins une résistance à coefficient de température positif.

Cette source de chauffage additionnel 3 est disposée, avec l'échangeur de chaleur 2, dans un conduit 1 de l'installation précitée, dans lequel circule le flux d'air F. Préférentiellement, le radiateur 2 et la source additionnelle 3 sont disposés en série dans le conduit 1, suivant la direction de parcours du flux F.

Dans l'exemple décrit, la vanne 4 est de type électronique. Un signal de commande S1 contrôle l'ouverture et la fermeture de la vanne 4. Préférentiellement, cette vanne 4 est de type hacheuse et fonctionne en tout (position d'ouverture totale) ou rien (position de fermeture totale). En se référant à la figure 2A, le signal S1 présente une allure en créneaux (succession d'échelons de niveau "haut" et "bas"). Dans l'exemple, le signal S1 est sensiblement périodique, de fréquence f. Par exemple, lorsque le signal S1 est à un niveau haut, la vanne 4 du radiateur de chauffage est ouverte, ce qui permet d'augmenter le débit de fluide d'échange thermique dans le radiateur 2 et, de là, la température du flux d'air F qui traverse le radiateur 2. En revanche, lorsque le signal S1 est à un niveau bas, la vanne 4 est fermée. La fréquence f du signal S1 définit ainsi un débit moyen de fluide d'échange thermique dans le radiateur de chauffage 2. C'est ainsi qu'une augmentation de la fréquence f conduit à une augmentation d'un débit moyen de fluide dans le radiateur 2 et, de là, à une augmentation de la température du flux d'air F.

Le dispositif selon l'invention comporte un module de commande 5 comprenant un module 51 de mise en forme du signal S1, pour la commande de la vanne électronique 4. Ce module de commande 5 comprend une interface de communication 52 avec un organe de commande placé dans l'habitacle du véhicule automobile, à disposition d'un passager, de manière à régler la température du flux d'air ventilé dans l'habitacle. Ainsi, le module de commande 5 reçoit des signaux de commande SC issus de l'habitacle et délivre un signal correspondant S1, de commande de la vanne électronique 4.

Le module de commande du dispositif selon l'invention comprend en outre un second module de mise en forme 50 du second signal S2 de commande de l'alimentation des résistances à coefficient de température positif que comporte la seconde source de chaleur 3. Le module 50 reçoit une réplique S'1 du signal S1 (issu du module de mise en forme 51 du signal S1) et met en forme le signal S2 à partir d'une transformation choisie de la réplique S'1.

Dans une première forme de réalisation, le module 50 comporte un diviseur de fréquence. Ainsi, la fréquence f du signal de réplique S'1 est divisée (par trois dans l'exemple représenté sur la figure 2B). Le signal résultant correspond au signal S2 de commande de la seconde source de chaleur 3. En se référant à la figure 2B, le signal S2, de fréquence diminuée par rapport à la fréquence f du signal S1, présente aussi une allure en créneaux avec des niveaux haut correspondant à une alimentation électrique des résistances de la seconde source de chaleur 3 et des niveaux bas correspondant à un arrêt de cette alimentation. En pratique, le signal S2 correspond à une tension d'alimentation aux bornes des résistances de la source additionnelle 3. Lorsque ces résistances sont alimentées, elles dégagent par effet Joule de la chaleur, ce qui permet de chauffer additionnellement le flux d'air F qui circule dans le conduit 1 de l'installation.

Il est à noter qu'une commande additionnelle SC' issue de l'habitacle peut être prévue (flèche en trait pointillé) pour commander une alimentation électrique de la source de chaleur additionnelle 3, directement.

Ainsi, dans ce premier mode de réalisation, la chaleur dégagée par la seconde source 3 est proportionnelle au débit moyen de fluide d'échange thermique qui circule dans le radiateur de chauffage 2.

Dans un second mode de réalisation, il est prévu de déclencher l'alimentation électrique des résistances de la seconde source additionnelle 3, à partir d'une valeur seuil du débit moyen dans la vanne 4. En se référant à la figure 3 qui représente un exemple de réalisation du module de mise en forme 50 du signal S2, il peut être prévu un circuit intégrateur de la réplique S'1 du signal S1, comportant une résistance R et un condensateur C de valeurs respectives choisies, le condensateur C étant monté en parallèle avec la branche "moins" d'un amplificateur opérationnel AO1. Le signal Si en sortie de l'amplificateur opérationnel AO1 résulte ainsi d'une intégration du signal S'1 sur une période fonction de R et de C. Il est ensuite prévu un bloc comparateur comportant un second amplificateur opérationnel AO2, propre à comparer le signal Si à un signal seuil Sth. Sans contre-réaction, l'amplificateur opérationnel AO2 est saturé, la borne moins de cet amplificateur étant soumise à une tension (ou signal) Sth constante.

Tant que la tension associée au signal Si reste inférieure à la tension seuil Sth, la tension associée au signal S2 en sortie de l'amplificateur opérationnel AO2 reste à un niveau bas (en pratique à un niveau équivalent à -Vsat qui correspond à la tension de saturation de l'amplificateur opérationnel AO2).

Lorsque la tension associée au signal Si est supérieure à la tension seuil Sth, la tension associée au signal S2 passe à un niveau haut (équivalent à +Vsat).

On obtient ainsi un signal S2 de commande de la source additionnelle 3, qui passe à un niveau haut lorsque une fréquence f du signal S1 devient supérieure à une fréquence seuil. Par conséquent, l'alimentation de la source 3 est déclenchée lorsque le débit moyen de fluide d'échange thermique dans le radiateur 2 dépasse un débit seuil prédéterminé. La tension seuil Sth appliquée sur la borne moins de l'amplificateur AO2 peut être ajustée en fonction du débit seuil précité, qui est désiré pour l'application visée.

En variante des deux modes de réalisation décrits ci-avant, il peut être prévu une vanne 4 mécanique, qui comporte un organe de contrôle mécanique du débit de fluide dans la vanne, à la manière d'un robinet. Cet organe de contrôle peut se déplacer mécaniquement entre une position de fermeture totale de la vanne 4 et une position d'ouverture totale de cette vanne. Cet organe de contrôle est couplé mécaniquement à des moyens de commutation de l'alimentation électrique de la source additionnelle 3. Ainsi, un déplacement mécanique de l'organe de contrôle de débit induit une commutation des résistances électriques dégageant de la chaleur par effet Joule. Par exemple, le nombre de résistances alimentées électriquement peut augmenter en fonction d'un déplacement de l'organe de contrôle vers une position qui correspond à une ouverture totale de la vanne 4. En pratique, les moyens de commutation peuvent comprendre des pistes électriques connectées à des bornes électriques des résistances. Sur ces pistes un curseur peut se déplacer longitudinalement ou en rotation, en suivant le déplacement (longitudinal ou rotatif) de l'organe de contrôle du débit de la vanne 4.

Bien entendu, la présente invention ne se limite pas à la forme de réalisation décrite ci-avant à titre d'exemple. Elle s'étend à d'autres variantes.

Ainsi, on comprendra que l'invention ne se limite pas à un dispositif de chauffage d'un habitacle de véhicule automobile. L'échangeur de chaleur 2 peut en effet se présenter sous la forme d'un évaporateur d'une boucle de climatisation d'une installation thermique d'un habitacle de véhicule automobile. Dans cette forme de réalisation, un fluide frigorigène circule dans l'échangeur de chaleur 2 et une diminution de débit de ce fluide peut entraîner, le cas échéant, le déclenchement de la source additionnelle 3.

Les signaux en créneaux représentés sur les figures 2A et 2B sont décrits ci-avant à titre d'exemple. En variante il peut être prévu des signaux triangulaires ou autres.

Par ailleurs, le montage électronique représenté sur la figure 3 est décrit aussi à titre d'exemple et admet toute autre variante.

Dans l'exemple décrit ci-avant, la source de chaleur additionnelle 3 comporte des résistances à coefficient de température positif. Dans une variante simplifiée du dispositif selon l'invention, cette source 3 peut comporter des résistances ohmiques simples.

## Revendications

1. Dispositif de chauffage ou climatisation de l'habitacle d'un véhicule automobile, du type comprenant un radiateur de chauffage du flux d'air (2), destiné à être parcouru par un fluide d'échange thermique propre à coopérer thermiquement avec un flux d'air (F) traversant le radiateur (2), ainsi qu'un module de commande (5) d'une vanne (4) d'alimentation en fluide du radiateur, en vue de modifier la température du flux (F) en fonction du débit de fluide dans le radiateur (2), ledit dispositif comportant en outre une source de chaleur additionnelle (3), électrique, propre à être mise en service pour élever ladite température, le module de commande (5) étant agencé en outre pour activer la seconde source (3) en cas d'insuffisance du radiateur (2) en déclenchant l'alimentation de la seconde source (3) et/ou augmenter sa puissance lorsque le débit du fluide dans le radiateur (2) est réglé en vue d'augmenter la température du flux d'air (F), **caractérisé en ce que** la vanne (4) est électronique de type hacheuse, **en ce que** le module de commande (5,51,50) est propre à délivrer un premier signal (S1) de commande de ladite vanne (4), ainsi qu'un second signal (S2) de commande de la seconde source (3), fonction dudit premier signal (S1),et **en ce que** le premier signal (S1) est un signal à échelons, avec des niveaux bas induisant une fermeture de la vanne (4) et des niveaux hauts induisant une ouverture de la vanne, tandis que le second signal (S2) est un signal à échelons, avec des niveaux bas induisant un arrêt d'alimentation électrique de la seconde source (3) et des niveaux hauts induisant une mise en service de la seconde source.

2. Dispositif selon la revendication 1, **caractérisé en ce que** le module de commande (5) est agencé pour faire varier la puissance de la seconde source (3) proportionnellement à un débit moyen de fluide dans le radiateur (2).

3. Dispositif selon la revendication 2, **caractérisé en ce que** le premier signal (S1) est sensiblement périodique, et **en ce que** le module de commande (5,50) est agencé pour mettre en forme le second signal (S2) à partir d'une augmentation de la période du premier signal (S1).

4. Dispositif selon l'une des revendications 2 ou 3, **caractérisé en ce que** le module de commande (5) est agencé pour déclencher l'alimentation de la seconde source (3) à partir d'un seuil d'un débit moyen de fluide dans le radiateur (2).

5. Dispositif selon la revendication 4, prise en combinaison avec la revendication 3, **caractérisé en ce que** le module de commande (5,50) est agencé pour mettre en forme le second signal (S2) à partir d'une intégration du premier signal (S1) sur une durée prédéterminée, les niveaux hauts du second signal (S2) correspondant à une valeur d'intégration (Si) supérieure à une valeur seuil prédéterminée (Sth).

6. Dispositif selon l'une des revendications précédentes, **caractérisé en ce que** la seconde source (3) est propre à dégager de la chaleur par effet Joule.

7. Dispositif selon la revendication 6, **caractérisé en ce que** la seconde source (3) comprend au moins une résistance à coefficient de température positif.

## Patentansprüche

1. Heizungs- oder Klimatisierungsvorrichtung der Kabine eines Kraftfahrzeugs von der Art mit einem Heizkörper des Luftstroms (2), der dazu bestimmt ist, durch ein zum thermischen Zusammenwirken mit einem den Heizkörper (2) durchquerenden Luftstrom (F) geeignetes thermisches Austauschmedium durchlaufen zu werden, sowie einem Steuermodul (5) eines Versorgungsventils (4) des Heizkörpers mit dem Medium zur Änderung der Temperatur des Stroms (F) in Abhängigkeit vom Mediumdurchsatz im Heizkörper (2), wobei die genannte Vorrichtung darüber hinaus eine zusätzliche elektrische, zur Inbetriebnahme zur Erhöhung der genannten Temperatur geeignete Wärmequelle (3) umfasst, wobei das Steuermodul (5) darüber hinaus angeordnet ist, um die zweite Quelle (3) bei Nicht-Ausreichen des Heizkörpers (2) durch Auslösen der Versorgung der zweiten Quelle (3) zu aktivieren und / oder seine Leistung zu erhöhen, wenn der Durchsatz des Mediums im Heizkörper (2) zur Erhöhung der Temperatur des Luftstroms (F) eingestellt ist, **dadurch gekennzeichnet, dass** das Ventil (4) elektronisch vom Typ Zerhacker ist, dass das Steuermodul (5, 51, 50) geeignet ist, um ein erstes Steuersignal (S1) des genannten Ventils (4) sowie ein zweites Steuersignal (S2) der zweiten Quelle (3) in Abhängigkeit des genannten ersten Signals (S1) abzugeben und dass das erste Signal (S1) ein Stufensignal mit ein Schließen des Ventils (4) induzierenden unteren Stufen und eine Öffnung des Ventils induzierenden oberen Stufen ist, während das zweite Signal (S2) ein Stufensignal mit einen Stillstand der Stromversorgung der zweiten Quelle (3) induzierenden unteren Stufen und eine Inbetriebnahme der zweiten Quelle induzierenden oberen Stufen ist.

2. Vorrichtung gemäß Anspruch 1, **dadurch gekennzeichnet, dass** das Steuermodul (5) angeordnet ist, um die Leistung der zweiten Quelle (3) proportional zu einem durchschnittlichen Mediumdurchsatz im Heizkörper (2) zu variieren.

3. Vorrichtung gemäß Anspruch 2, **dadurch gekennzeichnet, dass** das erste Signal (S1) deutlich periodisch ist und dass das Steuermodul (5, 50) angeordnet ist, um das zweite Signal (S2) ausgehend von einer Erhöhung der Periode des ersten Signals (S1) in Form zu bringen.

4. Vorrichtung gemäß Anspruch 2 oder 3, **dadurch gekennzeichnet, dass** das Steuermodul (5) angeordnet ist, um die Versorgung der zweiten Quelle (3) ausgehend von einem Schwellenwert eines durchschnittlichen Mediumdurchsatzes im Heizkörper (2) auszulösen.

5. Vorrichtung gemäß Anspruch 4 in Verbindung mit Anspruch 3, **dadurch gekennzeichnet, dass** das Steuermodul (5, 50) angeordnet ist, um das zweite Signal (S2) ausgehend von einer Integration des ersten Signals (S1) für eine vorbestimmte Dauer in Form zu bringen, wobei die oberen Stufen des zweiten Signals (S2) einem Integrationswert (Si) entsprechen, der höher ist als ein vorbestimmter Schwellenwert (Sth).

6. Vorrichtung gemäß einem der vorherigen Ansprüche, **dadurch gekennzeichnet, dass** die zweite Quelle (3) geeignet ist, die Wärme durch Joule-Wirkung abzugeben.

7. Vorrichtung gemäß Anspruch 6, **dadurch gekennzeichnet, dass** die zweite Quelle (3) wenigstens einen Widerstand mit positivem Temperaturkoeffizienten umfasst.

## Claims

1. A device for heating or air conditioning the cabin of a motor vehicle, of the type comprising a radiator for heating the air flow (2), intended to have a heat exchange fluid running through it able to cooperate thermally with an air flow (F) passing through the radiator (2), as well as a module (5) controlling a valve (4) supplying the radiator with fluid, with a view to modifying the temperature of the flow (F) according to the flow of fluid in the radiator (2), and the said device also comprising an additional, electrical, heat source (3), able to be put in service in order to raise the said temperature, the control module (5) also being arranged so as to activate the second source (3) in the event of inadequacy of the radiator (2) by triggering the supply to the second source (3) and/or to increase its power when the flow of fluid in the radiator (2) is adjusted with a view to increasing the temperature of the air flow (F), **characterised in that** the valve (4) is electronic, of the chopper type, **in that** the control module (5, 51, 50) is able to deliver a first signal (S1) controlling the said valve (4) and the second signal (S2) controlling the second source (3) dependant on the said first signal (S1), and **in that** the first signal (S1) is a stepped signal with low levels causing a closure of the valve (4) and high levels causing an opening of the valve, whilst the second signal (S2) is a stepped signal with low levels causing a stoppage of the electrical supply to the second source (3) and high levels causing the second source to be brought into service.

2. A device according to Claim 1, **characterised in that** the control module (5) is arranged to vary the power of the second source, (3) proportionally to a mean flow of fluid in the radiator (2).

3. A device according to Claim 2, **characterised in that** the first signal (S1) is substantially periodic, and **in that** the control module (5, 50) is arranged to shape the second signal (S2) from an increase in the period of the first signal (S1).

4. A device according to one of Claims 2 or 3, **characterised in that** the control module (5) is arranged to trigger the supply to the second source (3) from a threshold of a mean flow of fluid in the radiator (2).

5. A device according to Claim 4, taken in combination with Claim 3, **characterised in that** the control module (5, 50) is arranged to shape the second signal (S2) from an integration of the first signal (S1) over a predetermined period, the high levels of the second signal (S2) corresponding to an integration value (Si) superior to a predetermined threshold value (Sth) .

6. A device according one of the preceding claims, **characterised in that** the second source (3) is able to release heat by Joule effect.

7. A device according to Claim 6, **characterised in that** the second source (3) comprises at least one resistor with a positive temperature coefficient.
